# EUROPEAN PATENT APPLICATION

(11) **EP 4 696 477 A1**
(43) Date of publication of application: **18.02.2026**
(21) Application number: 25195235.4
(22) Date of filing: 11.08.2025
(51) Int. Cl.: B29B 17/02, C08J 11/14, C08J 11/16, D06L 4/10, D06L 4/75

(54) **PROCESS AND PLANT FOR RECYCLING TEXTILES**

(30) Priority: 12.08.2024 EP 24194213
(71) Applicant: Sanko Tekstil Isletmeleri San. Ve Tic. A.S., 16400 Inegol - Bursa (TR)
(72) Inventor: KONUKOGLU, Fatih, 16400 Inegol - Bursa (TR); LOYAN, Kenan, 16400 Inegol - Bursa (TR); KAPLAN, Gökhan, 16400 Inegol - Bursa (TR); ÖKTEM, Gözde, 16400 Inegol - Bursa (TR); HAMITBEYLI, Agamirze, 16400 Inegol - Bursa (TR); AKBULUT, Sabrettin, 16400 Inegol - Bursa (TR); DOGANAY, Salih, 16400 Inegol - Bursa (TR); ÇINAR, Hüseyin, 16400 Inegol - Bursa (TR); DEDE, Yavuz, 16400 Inegol - Bursa (TR); AGZIKARA, Seref, 16400 Inegol - Bursa (TR); UZ, Hazel, 16400 Inegol - Bursa (TR)
(74) Representative: Gislon, Gabriele

(57) **Abstract**

A process of treatment of waste blend textiles comprising polyester fibers and cotton fibres depolymerizes polyester in a controlled environment to obtain treated textile comprising cotton staple fibers suitable to be recycled into cotton yarns.

## Description

### Field of the invention

The present invention relates to a process and a plant for recycling textiles. In greater detail, the present invention relates to a process for recycling textiles that contain cellulosic staple fibers and polyester. The process allows to remove polyester and to recover and recycle cellulosic staple fibers from polyester blend textiles, namely from waste textiles such as fabrics, garments, yarns and fibers containing polyester filaments or polyester fibers and cellulosic staple fibers, particularly cotton staple fibers.
The cotton fibers and in general the cellulosic fibers recovered according to the process are suitable to be used as staple fibers for yarn production without having to be dissolved and regenerated into man-made cellulosic fibers.

### State of the art

Recycling waste textiles, especially fabrics and used garments and apparels, has become a primary target in the textile industry. Waste textiles include pre-consumer fabrics such as scrap fabrics and yarns or filaments obtained in the manufacturing process of fabrics and garments and of yarns, defective fabrics, and post-consumer textiles such as used or defective garments and fabrics deriving from upholstery. New and efficient processes for recycling waste textiles are being actively researched.

One of the goals of the invention is to recycle fabrics and textiles that contain both polyester and cotton and that are commonly known as polycotton or polyester-cotton fabrics. The aim of the invention is to recover and recycle the cellulosic staple fibers, especially the cotton fibers of the yarns of the waste textile in a form of staple fibers suitable for further use as secondary material for yarn spinning, and to remove from the waste textile and recover as corresponding monomers the polyester that is present in blend fabrics and textiles, i.e. in polycotton fabrics. Polycotton fabrics include yarns comprising cellulose staple fibers and polyester filaments or fibers. A blend fabric as defined in this application may comprise yarns containing cotton and polyester yarns and/or cotton yarns without polyester in combination with polyester yarns without cotton fibers. The yarns are woven or knitted into a fabric structure. A garment that is processed according to the invention, may include also non-fabric elements, usually made of metal or plastic materials, such as zippers, rivets, labels etcetera.

Methods of recycling polyester containing fabrics are known in the art. Some methods include de-polymerizing the polyester content in the fabric to obtain the starting monomers terephthalic acid (TPA) and ethylene glycol (EG). Known recycling processes of this type require a pre-cutting of the fabric into pieces or sheets before treating with a depolymerizing solution. The final products include cellulose pulp, TPA and EG; TPA and EG may be used for production of polyester or for other uses.

WO 2019/140245 discloses a method and a system for recycling a polycotton fabric in which a fabric is cut to obtain fabric pieces; the obtained pieces are treated in an aqueous solution at a pH of 10-14 in subcritical conditions at a temperature of 105°C to 190°C and a pressure of 40 to 300 psi for a time of 0 to 90 minutes. The polyester component is depolymerized into TPA and EG, the cotton fibers are degraded into a cellulose pulp that is subsequently recycled by additional processing into man-made cellulosic fibers i.e. regenerated cellulose material including rayon, viscose, lyocell, or cellulose acetate.

The known processes have the drawback that they are focused on recovering the polyester content of the waste textile material, whereby the quality of the cotton fibers after the process is dramatically decreased by said processes. E.g. strength, length and dyeability of the resulting fibers in particular when the recycled cotton fibers have to be dyed with a dye different from the dye of the original waste textile, are dramatically decreased.

It is thus an aim of the present invention to solve the above-mentioned drawbacks of the known processes of recycling polyester-cotton textiles and to provide a recycling process that provides a safe, low-cost, easy and environmentally clean way of recycling waste polyester-cotton textiles, namely fabrics, garments and yarns (and optionally also fibers), by recovering cotton (or cellulosic) fibers in a state identical or as close as possible to the characteristics of original virgin cotton fibers in the waste textile, so as to provide cotton fibers suitable to be used as such, i.e. as staple fibers, in the production of yarns. In other words, an aim of the invention is to recycle the cotton fibers of the waste textile back into cotton fibers suitable to be used for the further production of yarns in a textile-to-textile circular process.

Another aim of the invention is to provide a process that allows easy handling of the textile to be recycled during the process, even when a high amount of textiles is to be treated.

A further aim of the invention is to provide a process that is fully automatable.

Also aim of the invention is to provide a process that allows to obtain cellulosic (namely cotton) fibers that are easily and effectively dyeable, even with dyes different from the dye of the original waste textile material.

### Summary of the invention

The above aims of the invention are reached by means of the present invention according to one or more of the enclosed claims.

In particular, objects of the present invention are a process, a plant and a relevant product according to one or more of the independent claims, while preferred aspects are recited in the dependent claims.

The process is directed to the recycling of waste "blend textiles" that comprise both polyester and cotton, such as so-called "polycotton" textiles, or that contain polyester and other cellulosic fibres, different from cotton. Typically, in a fabric or garment, polyester is in the form of filaments; it may also be in the form of staple polyester fibers, e.g. in a yarn. Polyester may also be in the form of sewing yarns used to sew together the parts of the garment to be treated. In view of the aim of the invention to recover the valuable cotton content in a reusable form, preferably the amount of polyester in a textile according to the invention is 1% to 75% by weight of the weight of the textile, more preferably the amount of polyester is 4% to 50% by weight.

According to an embodiment, the process may be applied to waste textile with a polyester content from 0 to 100%. The process of the invention may be used to remove dyes from the waste fiber tufts also in case of 100% cotton fabrics. Indeed an object of the invention is to provide a process of decolorizing waste textiles.

According to an embodiment of the invention, the process is directed to the recycling of textiles, such as fabrics and garments, and includes a step of mechanically opening such textiles (e.g., yarns fabrics and garments) to obtain a fiber tufts comprising, or substantially consisting of, or consisting of, cellulosic fibers, namely cotton fibers, and polyester fibers. The fiber tufts are then treated with a depolymerizing solution that removes the polyester and the dyes and pigments possibly present in the tufts. After an optional bleaching step the tufts are dried and provide a cotton material suitable for being worked into a yarn.

The process of mechanically opening a textile is a process known in the art. Machines known as tearing machines are commonly used for such a task, during a so called tearing or unravelling step. Suitable machines are commercially available under the name Laroche, part of the Andritz group (FR) and from other producers such as Dell'Orco & Villani (IT) and Trützschler (DE).

Preferred tearing machines comprise a sequence of several rotating cylinders or drums, covered with opening means such as saw wires or steel pins which tear the textile, causing the textile structure to progressively open up to bundles of fibers, or tufts of fibers.

The terms "tufts", "fiber tufts" and "tufts of fibers" is thus a known condition of the textile, wherein a textile is converted into an aggregate of fibers as obtainable in a tearing machine wherein the textile is treated by a series of rotating drums provided tearing means such as steel pins. The fiber tufts obtained by known machines are thus an aggregate, or bundle, of fibers that are no longer in the form of yarns, but are in a physical condition similar to that of raw cotton after ginning and of cotton wool condition.

A fiber tuft can be carded into slivers. The fibers of a fiber tuft of the invention process are obtained long enough to be suitable to be used in a spinning process, possibly in combination with other fibers.

The fiber tufts used in the present invention are preferably mostly comprised of the above disclosed fibers. It was noted that the reduction of the length of the cotton fibers in the final product of the process of the present invention, with respect to the initial fiber tuft, is extremely low. The micronaire of the fiber tufts, measured with TexTechno Fibrotest according to ASTM D5867-12 is preferably between 3 and 5, more preferably between 3.5 and 4.5. This value applies to fineness and maturity of fibers which is crucial for spinning.

The terms "treated tuft", "treated fiber tuft" and "treated tuft of fibers" herein refer to the material obtained after that the tuft has been treated according to the process of the invention, and refer to a mass comprising, or substantially consisting of, or consisting of, cellulosic fibers, preferably cotton fibers.

Fiber tufts are e.g. discussed in or *Tearing of post-consumer cotton T-shirts and jeans of varying degree of wear,* by Julia Aronsson and Anders Persson (DOI: 10.1177/1558925020901322), and are also mentioned in brochures about tearing machines made available by the producers of said machines, as e.g. retrievable from https://web.archive.org/web/20230928052111/https://www.truetzschler.com/en/ spinning/products/tearing-lines/.

According to preferred embodiments, the content of unopened fibers in the fiber tufts is less than 20% by weight of the starting material. In other words, the content of unopened fibers is expressed as the percent ratio of the weight of unopened yarn pieces to the weight of starting material. The amount of unopened fibers can be evaluated manually or via devices such as the TexTechno Fibrotest. The content of unopened fibers obtained from the machine may be given by the machine as yarn pieces.

According to a possible solution, the tufts obtained from a tearing machine are further processed into another opening machine. The further opening machine is a so called fine opener.

In particular, according to an aspect, the tufts having a content of unopened fibers greater than 20% can be sent to a further opening process, e.g. into a fine opener machine, so as to reduce their unopened fiber content.

The term "mass" herein refers to a body of matter (particularly fibers and possibly fragments of yarns) with no definite shape.

The term "textiles" is here referred to fabrics and garments, both pre-consumer and post-consumer. The fabric may be a woven fabric, a knitted fabric or a non-woven fabric. Garments are encompassing any apparel item such as T-shirts, trousers, jeans, jackets, shirts, sport garments etcetera.

In embodiments, the garments may be used in the process as they are; i.e. garments may comprise non-textile elements such as zippers, rivets, buttons (these elements being typically made of metal or plastic), and labels. Said non-textile elements are removed from the textile material before the textile is fed to the tearing machine line. Removal of said elements is carried out in a way known per se in the art when the waste is preliminary subjected to a cutting step.

Fabrics and garments can include polycotton yarns. Exemplary polycotton yarns are core-spun yarns having a polyester core and a cotton sheath including cotton staple fibers. Blend non-woven textiles may include non-woven polyester filaments on a cotton or cellulosic substrate. The waste textiles may also in some embodiments include yarns. Suitable starting waste textiles are fabrics known as "hard waste" and "hard waste textile".

The term "cellulosic fibres" is here defining cotton fibers, especially virgin cotton fibers, fibers of modified cotton and other fibres typically used in a yarn such as linen fibres, fiber flax, jute fibres, hemp fibres, ramie fibres, kenaf fibres, sisal fibres, henequen fibres and similar. The cotton and cellulosic fibers in the textile to be recycled are generally in the form of staple fibers in a yarn. Viscose and other man-made cellulose-based fibers fall under the definition of cellulosic fibers in this application. In the following, reference will be made to cotton fibers in that it is the main cellulose-based product to be recovered from waste textile; the starting blend textile may however comprise also other cellulosic fibers that are non-cotton including man-made regenerated cellulose fibers, e.g. viscose, rayon, lyocell and similar.

In both cases the cotton fibers or cellulosic fibers are recovered as such (e.g. in the original form of staple fibers of a yarn) rather than being reduced to a pulp. As an example, a polycotton fabric, made of a cotton fibers and a polyester fibers, that is treated according to the invention process, will eventually result in fiber tufts where only the cotton fibers are present at the end of the process, the polyester having been depolymerized into the disodium salt of TPA and EG by the depolymerization solution during the process so as to be removed from the fiber tuft leaving the cotton fibers.

The term "bath ratio" is intended to define the ratio between the dry weight of the textiles to be recycled and the weight of the solution used to treat the textile, wherein, according to the stage of the invention process, the solution is either the depolymerizing solution, or the bleaching solution or the washing solution used in further steps of the process as described in the description here below.

The terms "dissolve" or "dissolution", when referred to polyester, is intended to define the result of the depolymerization of the polyester into its monomers, whereby polyester filaments or fibers are no longer or substantially no longer present in the treated fiber tuft after the invention process.

The term "circulating" referred to the depolymerization solution (and to the other solutions used in the process of the invention) is intended to define that the solution is subjected to a flow that is forced through the textiles, i.e., through the polycotton fiber tufts, and through a reaction chamber in which the fiber tufts are held. The flow is generated preferably by a pump that feeds the solution into the reaction chamber through the textiles and through the chamber. The solution leaves the reaction chamber and is subsequently fed back to it to be circulated again through fiber tufts and through the chamber. The bleaching and washing solutions are also circulated through the mass of tufts several times in the same way as the depolymerizing solution. The plant for carrying out the invention process comprises a fluidic circuit typically including an inlet and an outlet to the reaction chamber.

The fiber tufts are held in the reaction chamber in a still, i.e. static, condition. The term "still" or "static" condition is intended to define that the fiber tufts are housed in a reaction chamber and are held there while the depolymerization solution (or the bleaching solution or the washing solution) is fed into the chamber, through the tufts and out of the chamber. The fiber tufts fill the chamber so that they do not move with the solution, i.e. they are not displaced under the action of the flow of solution. Preferably the tufts in the reaction chamber are in a compressed condition.

In a preferred embodiment, the fiber tufts are housed in at least one cage or basket that is permeable to the flow of solution. The cage, preferably the cages, i.e. baskets, are put into the reaction chamber to carry out the invention process. As above mentioned, the tufts are compressed, namely, tufts are placed in the basket (or cage) and pressed into it to reach a bulk density of 100 to 350 g/L, preferably 240 to 320 g/L, more preferably 280-300 g/L, most preferably 300 g/L. While in some cases the bulk density may be as low as 100 g/L, preferably it is above 240 g/L. Thus, the bulk density of the fiber tufts in the chamber is within the above mentioned range. The fact that the textiles fill the chamber, preferably they are in a compressed condition, also provides the advantage of greatly improving the productivity of the process. In other words, embodiments providing for the textiles being stirred or moved within a depolymerization solution, such as e.g. in a washing machine by means of a rotating drum, are not according to the present invention.

Such a compression may be a wet compression, i.e. the fiber tufts are wetted, preferably with water, before being compressed. This promotes mobility of the fibers, helping in the compression step. When wet compression is used, the bulk density of the fiber tufts is preferably between 130 to 460 g/l, more preferably between 240 and 350 g/l, even more preferably between 280 and 350 g/l. In particular, it has been found that good results have been obtained when the bulk density is around 300 g/l. The above mentioned weight of the tufts is the weight in dry condition of the tufts.

In particular the present invention relates to a process for recycling waste blend textiles comprising polyester and cellulosic fibers, preferably cotton fibres, the process including a depolymerization of the polyester in a basic aqueous solution, comprising the following steps:
a) providing an amount of said waste blend textiles, wherein said textiles are selected from fabrics, garments and yarns;
b) mechanically opening said textiles into fiber tufts (1) comprising, or substantially consisting of, or consisting of, cellulosic fibers (40) and polyester fibers (4);
c) providing said fiber tufts (1) in a reaction chamber (10);
d) providing an amount of basic depolymerization solution (3) according to a bath ratio between 1/2 and 1/20 by weight of fiber tufts over weight of solution;
e) circulating said amount of depolymerizing solution (3) through said fiber tufts (1), to depolymerize said polyester (4) into corresponding monomers and to remove said polyester monomers from said fiber tufts;
f) removing said depolymerizing solution (3) from said reaction chamber (10);

wherein the temperature of the said depolymerizing solution in step e) is in the range between 101 °C and 160 °C,
and wherein the fiber tufts are in a still, i.e. static, condition and a flow of solution is circulated through the tufts to provide treated fiber tufts comprising cellulosic staple fibers, preferably cotton staple fibres, substantially free, preferably free, from polyester material.

Advantageously, the process of the invention allows to easily handle and treat a high amount of waste textiles to be recycled during the process, even when of textiles is to be treated. Indeed, the starting material is in the form of fiber tufts that can be easily fed into the reaction chamber after having been pressed into baskets (cages).

As disclosed below, the entire process may be automated. In embodiments the fiber opening (i.e. the process of reducing hard waste textiles into fibers in the form of tufts) is carried out in line with the depolymerizing process. In embodiments, the fiber opening step is carried separately, the tufts are pressed into bales and the bales are transported to the depolymerization plant. Here the bales are opened and fed to the depolymerization plant. After completion of the process the resulting fiber tufts may be again formed into bales.

Also, the process of the invention allows to obtain cotton fibers that are substantially free, or free, from dye molecules. Therefore, the necessity of further processing of the fibers for complete removal of the dye is avoided or greatly reduced.

Advantageously, in the process the chamber is fed with a depolymerizing solution, to depolymerize polyester fibres of the tufts; the fiber tufts are maintained in a still condition within the reaction chamber under mild reaction conditions allowing the cleavage of the ester bonds of polyester into its monomers, terephthalic acid as disodium salt (Na₂TP), and ethylene glycol (EG) and dramatically reducing the alteration and depolymerization of the cellulosic staple fibres.

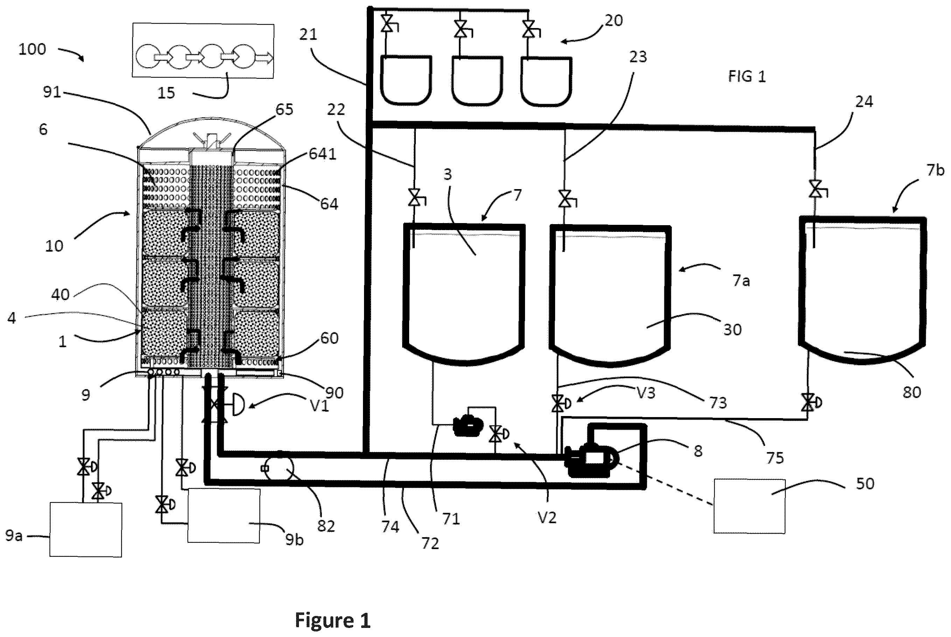

As visible in figures 1, 2 and 5, and explained here below, the flow of depolymerization solution is fed into the chamber, through the mass of compressed fiber tufts, i.e. through the "tufts", out of the chamber, back again to the chamber and through the fiber tufts, for several times to depolymerize the polyester present in the tufts. The number of times, i.e. the number of cycles that the solution is fed through tufts, may be adapted to the amount of polyester in the fiber tufts, e.g., the amount of polyester in the waste textile to be treated. Advantageously, the number of times, i.e. of cycles, the depolymerization solution is fed through textiles is in the range of 30 to 480 cycles per hour, preferably 50 to 400 cycles per hour, more preferably 60 to 300 cycles per hour, most preferably 70 to 200 cycles per hour. In other words, an amount of solution is pumped through the reaction chamber containing tufts at a flow rate such as to obtain the above mentioned number of cycles.

Advantageously, the temperature of the depolymerizing solution is increased in the closed chamber, whereby the pressure is correspondingly increased, to such values that the polyester is depolymerized but the degrading or alteration (e.g. reduction in the degree of polymerization) of the cotton staple fibers, is minimized and possibly avoided.

Advantageously in step e) a selected amount of depolymerizing solution at the claimed temperature is circulated, e.g. by means of a pump, in the chamber and through the fiber tufts for the entire length of step e) of the process. In other words, the mass comprising, or substantially consisting of, or consisting of, cellulosic fibers, preferably cotton fibers, and polyester fibers, i.e. the fiber tufts, is maintained in a static condition and is contacted several times with the depolymerizing solution by repeatedly passing, i.e. circulating, the solution through said fiber tufts to increase the content of disodium terephthalate (Na₂TP) or terephthalate ions or EG and more generally of dyes and products from degraded polyester in said solution, while maintaining the cotton or cellulosic fibres as intact as possible. It was found that the combination of keeping the fiber tufts, preferably compressed, in a still, or static condition together with circulating, i.e. flowing, the depolymerization solution through the fiber tufts results in that a full depolymerization of polyester, as well as effective removal of the dye, are obtained and that, at the same time, depolymerization of the cotton fibers is greatly reduced.

Advantageously, the technical effect of the circulation, i.e. flow, of the depolymerizing solution under mild conditions through static, i.e. still, fiber tufts, is to protect cellulose polymer chains against degradation and to recover cotton fibers (and other cellulosic fibers if present) that are suitable to be processed into recycled yarns in a way known in the art.

Advantageously, at the end of the process, the polyester fibres/filaments have been removed (by depolymerization) from the tufts, wherein treated tufts, i.e., a treated mass comprising, or substantially consisting of, or consisting of, cotton or other cellulosic fibres, substantially free, preferably free, from dyes and from polyester depolymerization products, in particular from Na₂TP, TPA, and ethylene glycol (EG) is obtained. The treated tufts obtained with the invention process are thus made of cotton/cellulosic fibers, which can be subjected to recycling processes of the cotton fibers in ways known in the art. The cotton fibres obtained according to the process of the invention can be used for yarns spinning processes.

According to an aspect of the present invention, a step of opening the textile into fiber tufts is performed. The fiber tuft comprises, or substantially consists of, or consists of, cellulosic fibers and polyester fibers. As discussed, the fiber tufts, i.e. the "tufts", can be obtained via techniques that are, per se, known in the art under the name of "tearing" or "unravelling". For example, waste fabrics and/or garments (known as "hard waste") can be mechanically treated by subsequent steps of progressive opening hard waste textile, e.g. via a series of cylinders provided with tearing means engaging the textiles wherein each cylinder performs a partial opening step until the required degree of opening is reached. Tearing or unravelling can be performed according to techniques and machines known, per se, in the art. For example, suitable machines are those currently produced and supplied by ANDRITZ Laroche SAS, Cours-la-Ville, France.

Waste garments may comprise non-textile elements such as zippers, rivets, buttons (these elements being typically made of metal or plastic), and labels. Such non-textile elements can be removed before or during the mechanical treatment according to techniques known, per se, in the art. For example, non-textile elements can be removed before or during the mechanical treatment preferably before the cylinders treatment by an appropriate apparatus.

### Depolymerization.

According to an aspect the depolymerizing solution is an alkaline solution, preferably an alkaline solution comprising sodium hydroxide or potassium hydroxide. The said solution preferably contains an amount in the range between 50 g/L and 500 g/L, preferably 50 to 90 g/L, of a sodium hydroxide solution with a Baumé degree equal to 48 °Be. In other words, the concentration of NaOH in the depolymerizing solution is in the range of 24g/L to 237 g/L of NaOH, preferably 24 g/L to 42 g/L of NaOH.

According to a possible aspect, the amount of depolymerizing solution to be used in the process is selected according to the amount of textiles, e.g. the weight of the fabric tufts, to be treated. In embodiments, the bath ratio is in the range of 1/2 to 1/20, preferably 1/2 to 1/8, most preferably 1/2 to 1/5; the bath ratio is the ratio by weight between the weight of textiles to be treated, i.e. the weight of the fiber tufts to be treated, and the weight of the depolymerizing solution.

According to a possible aspect in step e) the temperature of the depolymerizing solution is in a range between 101 °C and 160 °C, preferably in the range of 120°C to 160°C. Advantageously the temperature of the depolymerizing solution is in the range between 130 °C and 140 °C; the claimed ranges result in minimizing the alteration of the chemical and mechanical properties of the cotton or cellulosic fibres such as length and dimensions of the said fibres, degree of polymerization of the cellulose.

According to a possible aspect, the pressure inside the chamber during step c) is in the range of 1.05 bar (0.05 barg) to 7.0 bar (6.0 barg), preferably 2.7 bar (1.7 barg) to 7 bar (6 barg), more preferably 2.7 bar (1.7 barg) to 5.5 bar (4.5 barg).

According to a possible aspect, the depolymerizing step e) is carried out for a period of time within a range of 30 to 240 min, preferably 60 to 240 min, more preferably between 91 minutes to 240 minutes, most preferably between 100 minutes to 150 minutes, namely 120 minutes.

In a preferred embodiment the process step e) is carried out at 130 °C for 120 minutes, preferably at a pressure in the range of 2.7 bar (39.16 psi) to 5.5 bar (79.77 psi).

Advantageously the process of the invention results in a complete or substantially complete depolymerization of the polyester fibres. According to an aspect of the process of the invention, the depolymerizing solution is circulated through the chamber and the static fiber tufts according to a one flow direction, preferably from the center to the sides of the chamber; in other embodiments, the flow direction can be changed during the depolymerization process to alternate a flow directed from the center of the chamber to the peripherical wall with a flow directed from the peripherical wall to the center of the chamber. At the end of the depolymerization of the polyester, the depolymerizing solution is cooled to a temperature between 40 °C and 80 °C.

As above mentioned, the tufts are kept still, in a static condition and the depolymerization solution is pumped into the reaction chamber containing the fiber tufts, through the fiber tufts and out of the chamber, preferably several times until polyester has been fully depolymerized. The fiber tufts fill a portion of the reaction, i.e. depolymerization, chamber and are kept in place by suitable structural elements that avoid that the tufts move within the chamber. Preferably the fiber tufts are kept in a compressed state in at least one basket, or cage, so as to completely fill the relevant portion of the chamber: this state has the advantage that the depolymerization solution flows through all the static fibers in the tufts and that a high uniformity and high productivity of the process are obtained.

### Dye removal.

It is an advantage of the invention that all or the great majority of dyes are removed from the fibers during the depolymerization step. Indeed, reactive dyes and disperse dyes and also dope dyes are removed from the waste textile tufts by the depolymerization step. Also, a major amount of vat dyes is removed from the fiber tufts during the depolymerization step.

Advantageously, indigo and indigoid dyes may be removed, i.e. physically detached as indigo particles, at least in part from the fibers by the flow of depolymerizing solution circulated through the textiles. The detached indigo dyes accumulate in said solution, from which they may be recovered in a subsequent step.

According to embodiments, particularly when the tufts contain fibers that are indigo dyed, the process further comprises a step of bleaching the fiber tufts after the depolymerization step. Bleaching is advantageously carried out in the reaction chamber by means of a bleaching/decolorization solution comprising an oxidizing agent such as hydrogen peroxide, perborate, percarbonate, preferably hydrogen peroxide. The bleaching step is carried out after removing the depolymerizing solution from the chamber, some depolymerizing solution typically remains in the fiber tufts after removing the solution. Similarly to the depolymerization solution, also the bleaching solution is circulated through the static tufts, e.g. by means of a pump.

Advantageously, the bleaching solution allows to remove the colour imparted by the remaining indigo dye from the treated fibers. According to embodiments, the bleaching solution may include stabilizers and wetting agents, preferably dispersing agents such as, for example, Permulsin FF (Bozzetto Group) and/or wetting agents such as Sanwet NW 2109 (Chemko) and/or stabilizing agents for the oxidizing agent, such as Sanstabil A100 (Chemko).

According to embodiments, the bleaching solution is provided in an amount according to a bath ratio in the range of 1/2 to 1/20, preferably 1/2 to 1/8, more preferably 1/5 by weight of the fiber tufts (dry) and bleaching solution. Advantageously, there is no need to add extra amount of NaOH to the bleaching solution

According to embodiments, the oxidizing agent is present in the bleaching solution in an amount effective to remove the residual indigo dye from the treated fibers. In preferred embodiments, the bleaching solution contains between 1 g/L to 7 g/L, preferably 4 to 7 g/L, even more preferably 5 g/L of hydrogen peroxide solution with concentration 50% by weight (w/w). In other words, the concentration of H₂O₂ in the bleaching solution is in the range of 0.5 g/L to 3.5 g/L, preferably 2 g/L to 3.5 g/L, more preferably 2.5 g/L. According to embodiments, the bleaching solution is heated to a temperature between 100 °C and 110 °C, preferably 105 °C and kept at said temperature for a period of time between 80 minutes and 150 minutes, preferably about 90 minutes. At the end of the bleaching step, the bleaching solution may be cooled before being removed from the reaction chamber.

According to embodiments, the bleaching solution may be kept at a temperature between 100 °C and 110 °C, in order to, advantageously, minimize the alteration and degradation of the cotton or cellulosic fibres.

According to embodiments, the oxidizing agent is gradually poured in the bleaching solution in the chamber for a time period e.g. in the range of 2 to 7 minutes, preferably 5 minutes. Advantageously, the oxidizing agent is gradually poured in the bleaching solution in order to control the presence of undesired gaseous content inside the chamber produced from the reaction between the bleaching solution and oxidizing agent. The control of the amount of gaseous content inside the chamber prevents undesired increase of pressure inside the chamber and increases the efficiency of hydrogen peroxide.

### Washing.

According to embodiments, the process further comprises a step of washing the treated fiber tufts, by means of a washing solution that may preferably comprise dispersing agents, with a dispersing agents concentration preferably between 1 g/L and 5 g/L. In the washing step, TPA salts and EG possibly still present in the treated fiber tufts are removed.

Examples of suitable dispersing agent are Permulsin FF (Bozzetto Group) or Develope JFR NB (MKS DEVO), currently available in the market.

According to embodiments, the washing solution has a bath ratio (kg of textile/kg of solution) in the range of 1/2 to 1/20, preferably between 1/2 to 1/8, more preferably 1/5 and 1/6. Similarly to the depolymerizing and bleaching steps, also the washing step is carried out on static and compressed fiber tufts in the reaction chamber by a flow of washing solution that is circulated through the tufts. Washing step is carried out at a temperature of the solution that is less than 100°C, preferably about 90°C.

According to embodiments, the treated fibers, after depolymerization and removal of polyester monomers, comprise cotton fibres with a degree of polymerization between 600 and 3500 and detectable mechanical properties, such as length, strength and elongation, that make said fibers suitable for further use in yarn production.

The degree of polymerization of cellulose in cellulosic fibers can be calculated by measuring the relative viscosity via capillary viscometer, then calculating the corresponding limiting viscosity according to the ISO5351 standard and later calculating according to the equations known in the art such as modified Mark-Houwink-Sakurada equation for cellulose-solvent (standard method) system described in literature: Sihtola H, Kyrklund B, Laamanen L, Palenius I (1963) - Comparison and conversion of viscosity and DP-values determined by different methods. Paperi Ja Puu, 45:225-232. In detail, viscosity can be obtained from the equation [n] = 954xlog[ηᵣₑₗ]-325 mentioned also in WO2019/140245. DP is given as range from the equations: DP^{0.905}= 0.75x[η] ; and DP= 1.9[η].

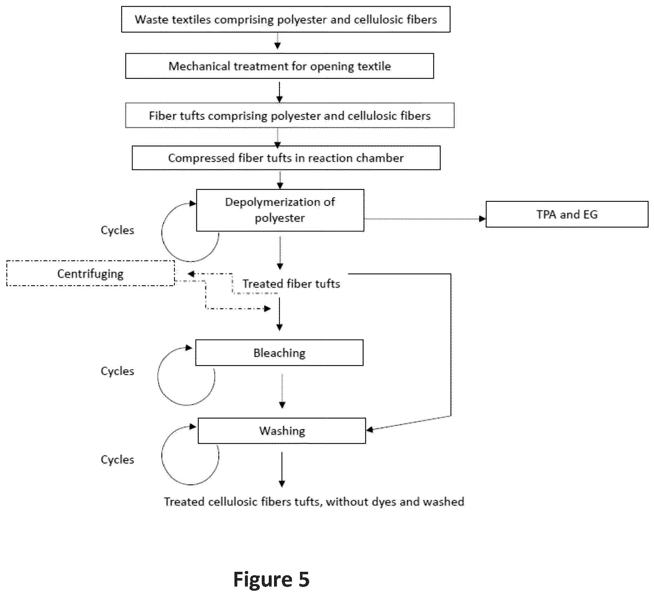

According to a preferred embodiment of the invention process, see e.g. fig. 5, the depolymerizing solution obtained after a first depolymerization cycle is re-used in a subsequent depolymerization cycle of a fresh batch of fiber tufts to be treated. According to embodiments, the bleaching solution and/or the washing solution can be used again in a subsequent bleaching cycle and washing cycle, respectively. In this way, advantageously, the consumption of water is greatly reduced.

The applicant has found that the depolymerizing solution may be used several times, e.g. for at least twenty times and even more, without losing its properties, provided that the content of NaOH is restored to the initially required amount before being re-used in a successive cycle of treatment of a new batch to be treated. Also, it was found that the increase in content of TPA salts and EG that occurs at each cycle, does not jeopardize the chemical properties and depolymerizing capability of the depolymerizing solution.

The number of times a depolymerization solution can be re-used in another depolymerization cycle is depending from the initial amount of polyester present in the textiles to be treated, and, therefore, to the amount of polyester present in the fiber tufts to be treated. In other words, the greater the amount of polyester present in the textile to be treated, the lower will be the number of cycles a depolymerizing solution can be re-used. This may also apply to a bleaching solution and/or a washing solution.

According to embodiments, the depolymerizing solution, the bleaching solution and the washing solution can be set to their required initial conditions (e.g. to the initial NaOH concentration and bleaching agent for the depolymerizing and bleaching solutions, respectively) and re-used in additional cycles of the process a number of times in the range of 1 to 100, preferably 10 to 100; typically 10 to 40.

It is an advantage of the invention that, after the depolymerization step, the cotton or cellulosic fibers, are not reduced to a cellulosic pulp, as it occurs in the prior art when a complete depolymerization of polyester is carried out. Rather, advantageously, the reduction of the DP (degree of polymerization) and of the mechanical properties of the cellulosic fibres is maintained to a level that is fully acceptable and in any case such that the cotton fibers after depolymerization of polyester and also after the complete process, i.e. including the optional bleaching and washing, are suitable to be recovered as staple fibers and to be recycled and used (with no need for chemical pre-treatment) for production of yarns and fabrics.

According to embodiments, if the textiles, namely yarns, fabrics and garments, contain one or more optical brightening agents, the process may further comprise a pre-treating step of removing the optical brightening agents from the textiles with a suitable solvent before the fabrics and/or garments are mechanically opened and reduced to a fiber tufts. In this step the solution removes brightening agents and/or inhibiting agents and/or quenching agents; the removal of the brightening agent is carried out with a bath ratio in the range of 1/2 to 1/20, preferably 1/10 at a temperature between 30 °C and 40°C for a period of time between 10 minutes and 30 minutes.

Optical brightening agents are chemicals compounds which can be added to fabrics to provide a whiter or brighter effect in area in which the optical brightening agents are present compared with areas of the fabrics in which the optical brightening agents are not present.

Optical brightening agents present in the waste textiles should be removed after fabrics and/or garments are mechanically reduced to fiber tufts in order to obtain, at the end of the process, treated cellulosic fibres having a homogenous decolorization and a homogenous level of brightness.

Advantageously, said pre-treating step of removing the optical brightening agents can be carried out using an aqueous solution comprising decolorizing agents for optical brighteners such as, for example, Fluorex DEL (CHT Group) and preferably also wetting agents such as Sanwet M30 (Chemko). Preferably, the decolorizing agents have a mass concentration between 0.2 g/L to 1.2 g/L.

Another object of the present invention is a plant for recycling fiber tufts comprising, or substantially consisting of, or consisting of, cellulosic fibers and polyester fibers, comprising a reaction chamber configured to contain the fiber tufts, at least one tank to contain a depolymerizing solution, and optionally any of a bleaching solution or a washing solution, a pump to feed and circulate a depolymerizing solution from the tank to and through the chamber, and control means to control the temperature of the depolymerizing solution inside the chamber, typically including a heating means and a cooling means.

The chamber is configured to contain the fiber tufts to be treated. Typically, the chamber is made in a material which is suitable for being in contact with the depolymerizing solution, the bleaching solution and the washing solution. Examples of such materials are steel metals, preferably stainless steel, more preferably stainless steel such as AISI 316 and AISI 316/316L

The plurality of tanks to contain a depolymerizing solution, a bleaching solution and a washing solution are fluidically connected to the chamber to feed or remove the solutions from the chamber. Typically said plurality of tanks are made in a material which is suitable to come into contact with the depolymerizing solution, the bleaching solution and the washing solution.

Advantageously, the pump allows to control the flow of the depolymerizing, bleaching and washing solutions from the plurality of tanks to the chamber. Typically, the said pump can be selected from centrifugal pumps, positive-displacement pumps, axial-flow pumps or similar pumps; preferred pumps are centrifugal pumps. Advantageously, the plant may also allow reversing the direction of the flow of the solutions inside the chamber in a way known per se, e.g. by means of an alternator switch device connected to the pump.

As previously mentioned, the depolymerizing solution is circulated by the pump through the textiles (and the chamber) until the polyester material in the textile has been depolymerized and completely or substantially completely removed - as monomers - from the textile.

The chamber is provided with heating means to increase the temperature of the depolymerizing solution. The heating means can be placed inside chamber e.g. at the bottom of the chamber. The heating means may be coils through which superheated steam is fed to heat the depolymerizing solution. Means for cooling the solution are also provided e.g. in the form of another coil connected to a source of cooling fluid such as cold water. Advantageously a same coil may be used as heating and cooling means by being selectively connected to a source of heating or cooling fluid.

Typically, the heating and the cooling means is connected to control means that is also connected to sensor means that detects the temperature of the depolymerizing solution inside the chamber.

According to embodiments, the chamber comprises one or more of a cage or basket, suitable to house the fiber tufts to be treated and let the solution pass through. Typically, the basket is housed in the reaction chamber during the process and is removed from the chamber at the end to have the compressed tufts removed from the basket. The tufts being in a compressed condition, they are removed in a form of a "cake" of treated tufts. The empty basket is then filled with a new batch of tufts to be treated.

Advantageously, the cage, or basket, comprises a rigid structure, e.g. a metal structure, typically in the form of a cylinder, provided with openings along its walls, to enable the depolymerizing solution to flow inside the chamber and through the textiles. The cage or basket has to withstand the pressure exerted on the fiber tufts when they are pressed into a compressed mass in the basket, to reach the required bulk density within the basket. Typically the tufts are compressed with a device suitable to exert 120 tons pressing power. In any case the final bulk density, expressed as kg of fiber tufts pressed in the volume of the basket, is in the range of 100 to 350 g/L, preferably 240 to 320 g/L, more preferably 280-300 g/L, most preferably 300 g/L.

Housing the waste blend fabrics in one or more basket allows to constrain the fibers in the basket during the flow of the solutions; in other words, the fiber tufts are kept still, i.e. static, while the flow of the depolymerizing solution is forced through the fibers in the chamber. According to embodiments, the fiber tufts fill the entire space of the basket; preferably the fiber tufts are compressed into said basket; above the top basket the chamber is provided with an empty space, as visible from the figures.

Preferably, the filtering basket is a perforated rigid container shaped according to the reaction chamber, comprising lateral perforated outer walls and a perforated rigid column-like side, i.e. defining a hollow portion, positioned at the central axis of the basket. Advantageously the depolymerizing solution can flow either from the perforated rigid column towards the fiber tufts and through the lateral perforated wall or from the lateral perforated walls towards and through the fibers allowing to have a homogeneous and uniform contact over time of the depolymerizing solution with the fibers.

According to embodiments, when the chamber comprises one basket, at least one, preferably a plurality of perforated separation elements are housed in the basket and positioned along said central column and extending transversally to it. The separation element comprises a perforated plate on which the fiber tufts can be placed. The perforated plate allows the flow of the solutions through the holes. The separation elements also act as retaining means to keep the fiber tufts in a static condition.

In another embodiment, more than one basket are provided, each separately filled with fiber tufts compressed to the required bulk density. The baskets are housed superimposed in the reaction chamber.

The present invention further relates to cotton fiber tufts as obtained by the invention process, said cotton fibers having a degree of polymerization between 600 to 3500 and are substantially free, preferably free, of dye.

### BRIEF DESCRIPTION OF THE DRAWINGS

Further aspects and advantages in accordance with the present invention will be discussed more in detail with reference to the enclosed drawings, given by way of non-limiting example, wherein:
Figure 1 is a schematic view of an embodiment of the plant according to the housing fibers tufts comprising polyester fibres and cellulosic fibres;
Figure 2 shows the schematic of the embodiment of figure 1 and the treated fiber tufts comprising decolorized cellulosic fibers at the end of the process;
Figure 3a shows a perspective view of the section of the filtering basket of figure 1;
Figure 3b shows a sectional view of the closed reaction chamber and the filtering basket of figure 1;
Figure 4 shows a perspective view of the perforated separation element of figure 1;
Figure 5 shows a scheme of an embodiment of the process of the invention comprising the step of mechanically treating garments and/or fabrics to obtain fiber tufts, the depolymerization step, the bleaching step and the washing step and the possible re-use of the respective solutions;
Figure 6 shows a perspective view of the heating and cooling element of the plant of figure 1;
Figure 7 is a photograph showing a plurality of fiber tufts before the process of the invention and
Figure 8 is a photograph showing the tufts of fig 7 after the process of the invention.

### DETAILED DISCLOSURE OF THE PRESENT INVENTION

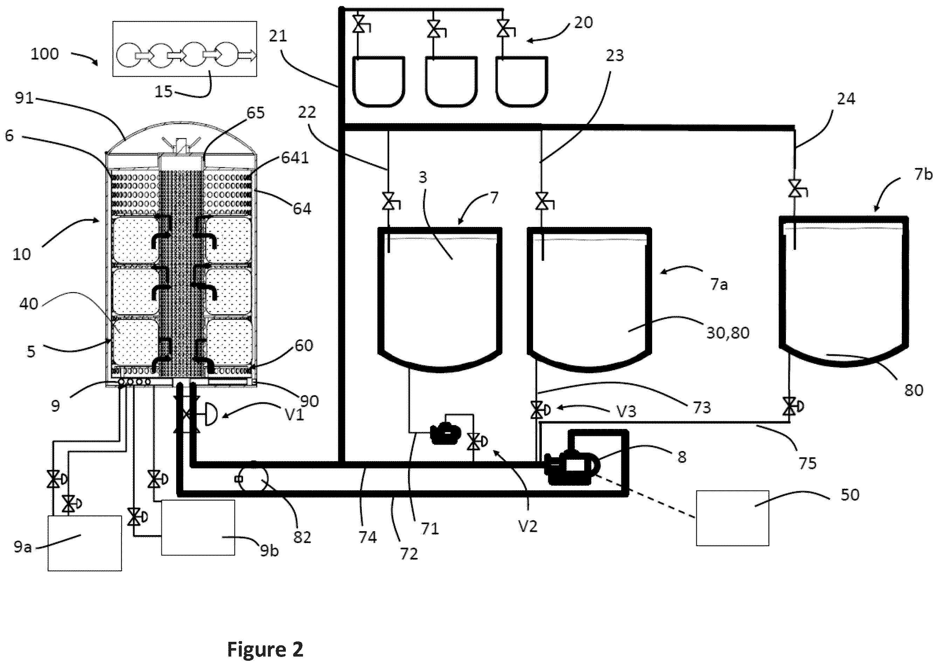

Figure 1 and figure 2 show a plant 100 suitable to carry out the process of the invention on fiber tufts comprising, or substantially consisting of, or consisting of, polyester and cellulosic fibers, preferably cotton fibres. In figure 1 the plant is shown at the initial stage of the process: it comprises a chamber 10 filled with the fiber tufts to be treated, said fiber tufts comprising polyester fibres 4 and cotton fibres 40.

According to the present invention, an amount of waste textiles, selected from fabrics, garments and mixtures thereof (possibly also yarns), is mechanically opened by an opening machine 15 to obtain fiber tufts comprising, or substantially consisting of, or consisting of, cellulosic fibers and polyester fibers, i.e., to obtain a mass comprising, or substantially consisting of, or consisting of, cellulosic fibers and polyester fibers. The fiber tufts can be obtained from, e.g., waste fabrics and/or garments, according to techniques that are, per se, known in the art. For example, waste fabrics and/or garments can be mechanically treated by progressive opening. Progressive opening of the textile can be performed according to techniques and opening machines 15 (in particular tearing machines) known, per se, in the art. For example, suitable machines are those currently produced and supplied by ANDRITZ Laroche SAS, Cours-la-ville, France. Machines for obtaining fiber tufts from waste fabrics and/or garments may be connected to the plant of the invention in a way known, per se, in the art. In an embodiment, one or more machines for obtaining fiber tufts from waste fabrics and/or garments is connected to the plant of the invention so that fiber tufts can be automatically moved from the machines for obtaining fiber tufts to the reaction chamber of the plant of the invention. In another embodiment the tufts are formed into bales that are transported to the depolymerization plant where they are opened and fed into the plant, e.g. they are compressed in the basket.

If needed, tufts from different bales, or more in general from different sources, may be mixed together to be used in the reaction chamber, so as to reach a desired ratio of polyester vs cellulosic fibers in the reaction chamber.

Waste garments may comprise non-textile elements such as zippers, rivets, buttons (these elements being typically made of metal or plastic), and labels. Such non-textile elements can be removed before or during the opening step, typically via a tearing machine, according to techniques known, per se, in the art. Known tearing machines are in fact usually provided with a device for separating non textile elements from textile elements.

Typically, the reaction chamber 10 is cylindrically shaped and includes a side wall, a bottom wall and a lid 91. The closed chamber is configured to withstand pressures generated in the invention process.

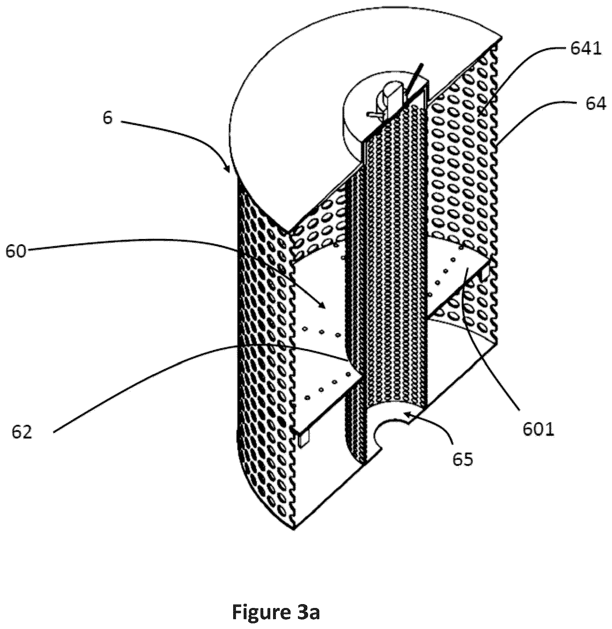

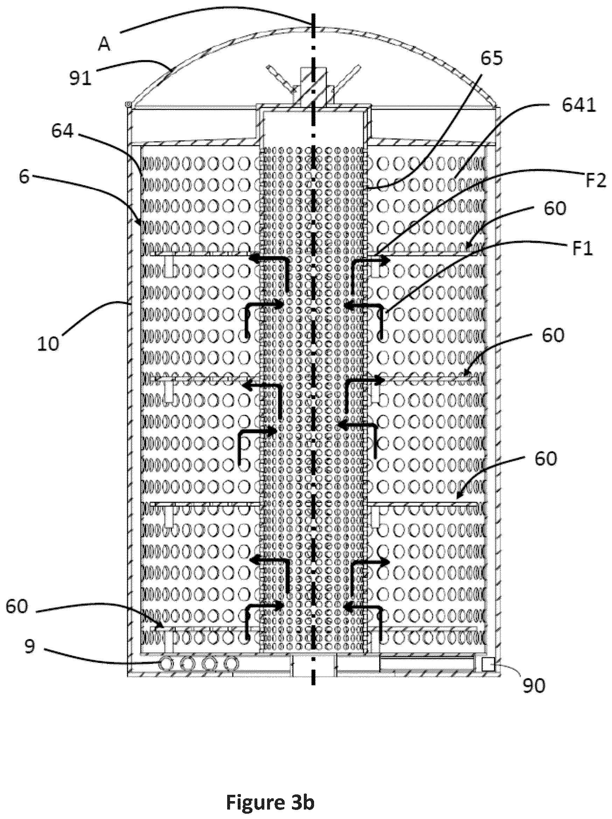

In the shown embodiment, the reaction chamber 10 comprises a basket 6 to house the fiber tufts to be treated. As shown in figures 3a and 3b, basket 6 is in the form of a cylindrical container, usually made of metal, including a perforated lateral wall 64 which allows a flow of a depolymerizing solution 3 within and through chamber 10 and the fiber tufts 1, being housed in basket 6. As shown in figure 3b with arrows F1 and F2, the flow of depolymerization solution 3 can be substantially in a first direction F2 from the central axis A through perforated internal wall, or column, 65 towards outer wall 64 or in a second direction F1 from the perforated wall 64 substantially opposite to the first flow direction.

In other words, the solution inside the chamber 10 can be circulated in a first direction or in a second direction. In the first direction the flow inside the chamber 10 goes from the inner perforated wall 65 of basket 6 and is forced through the fiber tufts 1 to exit basket 6 from the perforated wall 64. In the second circulation direction, the feeding direction is reversed, i.e. the solution is fed to the chamber in correspondence of the outer perforated wall 64 and forced through the fabrics towards the inner perforated portion 65 and towards the central axis A.

If circulation, i.e. flow, is alternated, according to embodiments, the first recirculation may be preferably carried out in the first direction for 2 to 6 minutes, preferably 4 minutes. In embodiments, the second recirculation may be carried out in the second direction for 4 to 8 minutes, preferably 6 minutes. In embodiments, the flow in the process can be conducted all in the first direction or in the entire process the flow can be conducted in the second direction only.

Advantageously the flow of the depolymerizing solution 3 through the fabrics, out of the chamber and back into it, in a first radial direction and/or in a second radial direction, allows the depolymerizing solution 3 to reach all the the fibers within the fiber tufts 1, that are kept still, i.e. are not stirred in the solution, and to ensure a uniform depolymerization of polyester in a short time. Maximizing the flow injections from the perforated walls of the filtering basket 64 and 65 provides a proper absorption of the depolymerizing solution 3 within the fiber tufts and therefore maximizes the depolymerization of the polyester fibres 4.

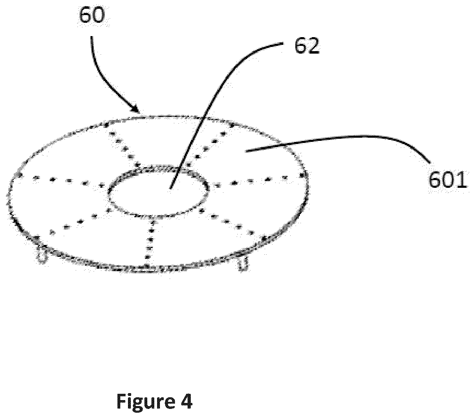

In the shown embodiment, see figures 3b and 4, chamber 10 comprises at least one, preferably a plurality of perforated separation elements 60 housed in basket 6, transversally to central column 65. The diameter of separation element 60 is less than the diameter of basket 6, i.e. less than the distance between the internal surfaces 641 of the lateral wall 64, to allow element 60 to be inserted in the basket without leaving a too wide gap on the side. As visible in figure 4 element 60 is provided with a central hole 62 that allows the separation element to slide without mechanical interference along column 65 and inside basket 6. Separation element 60 allows to maximize the filling of basket 6 in chamber 10 with the fiber tufts and to prevent the fibers from moving within the basket. In case more than one separation element 60 is housed in the filtering basket 6 there will be a fiber tufts 1 housed on top of each separation elements 60. Advantageously element 60 comprises a perforated plate 601 such that the flow of the depolymerizing solution 3 is ensured inside chamber 10. Figure 3b also shows a top retaining element 603.

The plant 100 further comprises a plurality of tanks, or reservoirs, to contain a depolymerizing solution 3 in tank 7, a bleaching solution 30 in tank 7a and a washing solution 80 in a tank 7b. Said tanks are connected to chamber 10 with respective pipes and through a circulation loop including a pump 8 connected to the reaction chamber 10 by means of conduits 72 and 74 and fluid alternator device 82.

The depolymerizing solution 3 can flow from tank 7 to chamber 10 through conduit 71, and conduits 72 and 74 according to the direction of the flow as provided by flow alternator 82. As visible in figures 1 and 2, conduit 72 is connected to the inner column 65 of basket 6 so that it may feed the solution to the inner column 65 of basket 6; conduit 74 is connected to the outer portion of the chamber in correspondence to wall 6 of the basket to receive the solution that has been circulated, i.e. flowed, through the fibers and the chamber, in a reversed flow conduit 74 feeds the solution to the chamber.

The alternator device 82 provides an advantageous alternated circulation of the depolymerizing solution inside chamber 10. After feeding the depolymerizing solution to the chamber 10, valve V2 and valve V1 are positioned such that the depolymerizing solution can be circulated through conduits 72, 74 wherein the recirculation of the depolymerizing solution is in a counter clockwise direction. Alternatively, the direction of the flow can be inverted by means of the alternator device 82 such that the recirculation of the depolymerizing solution through the conduits 72,74 and the chamber 10 is in a clockwise direction.

The bleaching solution 30 and the washing solution 80 can flow from the plurality of tanks 7a and 7b, respectively, to conduits 72 and 74. Valves V1, V2 and V3 are located on the circuit ducts to control the flow in the conduits. The plant 100 further comprises a plurality of spare chemical tanks 20 to provide reagents to the tank 7 through conduits 21,22 or to the tank 7a through conduits 21,23 or to the tank 7b through conduits 21,24. Reagents can be alkaline solution or alkali, oxidizing agents, wetting agents, dispersing agents, stabilizing agents, decolorizing agents and similar reagents.

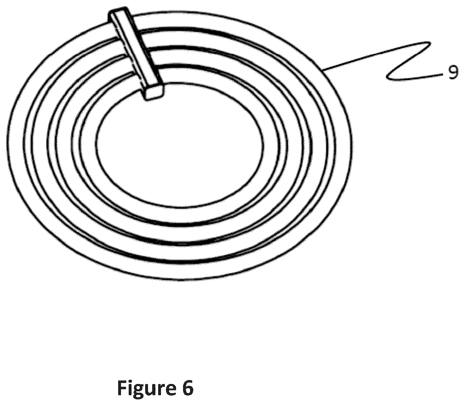

The plant 100 further comprises a heating and cooling element 9a, 9b and a temperature sensor 90 to control the temperature of the depolymerizing solution 3 or the bleaching solution, inside the reaction chamber 10. According to an aspect, the heating and cooling means can be realized with a coil, as an example the one shown in fig. 6, that is selectively connectable with a source of steam 9a or to a source of cool water 9b to respectively heat or cool the solution in chamber 10.

Plant 100 may also comprise a centrifuge 50, wherein fiber tufts can be centrifuged. The centrifuge 50 can be connected, in a known manner, not shown in detail, to the circuit feeding the depolymerizing solution to the reaction chamber 10 (but it may be provided with a separate circuit, too). Centrifugation is typically carried out after the washing step, before the fiber tufts are dried; a centrifugation step may also be carried out after the depolymerization step if no bleaching step is required.

The present invention relates to a process for recycling waste blend textiles comprising polyester and cellulosic fibers, preferably cotton fibres, the process comprising the following steps: a) providing an amount of said textiles, wherein said textiles are selected from fabrics, garments and mixtures thereof; b) mechanically opening said textiles into fiber tufts comprising, or substantially consisting of, or consisting of, cellulosic fibers 40 and polyester fibers 4; c) providing said fiber tufts in a reaction chamber 10; d) providing an amount of basic depolymerization solution 3 according to a bath ratio in the range of 1/2 and 1/20 by weight of fiber tufts over weight of solution; e) circulating said amount of depolymerizing solution 3 through said fiber tufts to depolymerize said polyester into corresponding monomers and to remove said polyester monomers from said fiber tufts; f) removing said depolymerizing solution 3 from said reaction chamber 10; wherein the temperature of the said depolymerizing solution 3 in step e) is in the range between 101 °C and 160 °C, and wherein g) the fiber tufts are in a still, i.e. static, condition and the solution 3 is circulated through it to provide a treated fiber tufts comprising cellulosic staple fibers 40, preferably cotton staple fibres, substantially free, preferably free, from polyester material.

As discussed, the mechanical opening is preferably carried out by a tearing machine, usually provided with cylinders having tearing means acting on the textile, so as to open it and obtain fiber tufts.

If waste garments comprise non-textile elements such as zippers, rivets, buttons (these elements being typically made of metal or plastic), and labels, such non-textile elements are preferably removed. Techniques known in the art can be used to perform this step. Usually, tearing machines are equipped with means to carry out such a separation preliminary to the step of opening the yarns of the textile into fiber tufts

In the exemplary embodiment shown in the figures, the fibers tufts are placed in basket 6, possibly with the use of one or more separation elements 60. The basket is preferably completely filled with the fiber tufts to be treated.

The fiber tufts 1, comprise polyester fibres 4 and cellulosic fibers 40, preferably cotton fibres 40, before the depolymerization step.

After filling the basket 6 with fiber tufts and compressing the fibers to the above disclosed bulk density, a depolymerizing solution 3 comprising sodium hydroxide or potassium hydroxide, preferably sodium hydroxide is fed to the reaction chamber 10. The solution is prepared by adding to water an amount in the range of 50 g/L to 500 g/L of a NaOH solution that has a Baumé degree of 43 to 50 °Be, preferably of 48 °Be. In a preferred embodiment the amount of said 48°Be solution of NaOH that is added to water is in the range of 50 g/L to 90 g/L of said solution. 50 g/L to 500 g/L of said 48° Baumè solution corresponds to about 24 g to 237 g/L of solid (pellet) NaOH.

The amount of depolymerizing solution 3 is selected to have a bath ratio between 1/2 and 1/20, more preferably the bath ratio of the depolymerizing solution is 1/3 to 1/8 by weight of fibers to bath. Preferred values are 1/5 and 1/6. The depolymerizing solution is preferably heated by means of coil 9 to which steam, namely superheated steam, is fed.

The temperature of the depolymerizing solution 3 in the chamber 10 is controlled in order to depolymerize the polyester fibres 4 while maintaining as far as possible the original mechanical and chemical characteristics, e.g. the degree of polymerization and the dimensions, of the cotton fibers 40. The temperature of the depolymerization solution 3 in the chamber 10 is controlled via sensor 90 to be maintained in the range of 101 °C and 160°C preferably 130 to 140 °C.

According to embodiments, the pressure inside chamber 10 in step e) is in the range between 1.05 bar (15.23 psi) to 7.0 bar (101.5 psi), preferably 2.7 bar (39.16 psi) to 7.0 bar (101.5 psi), more preferably between 2.7 bar (39.16 psi) and 5.5 bar (79.77 psi). The pressure inside the closed chamber 10 may change due to a change of temperature of the depolymerizing solution 3.

According to embodiments, the temperature of the depolymerizing solution 3 in the chamber 10 is kept for a period of time between 30 minutes and 240 minutes, preferably between 100 and 150 minutes, more preferably 120 minutes. After said period of time the depolymerizing solution is cooled to a temperature between 40 °C and 80 °C. When the amount of polyester fibers to be depolymerized is low or null, especially when the process is used to decolorize textiles, the process time may be quite short, also of about 20 minutes.

The depolymerizing solution 3 is then removed from the chamber 10 trough conduits 71,72,74 and controlling valves V1, V2.

Reactive dyes are hydrolysed by the depolymerization solution 3 to provide non-dyed fibers substantially free, preferably free, from polyester. Vat dyes are partially removed during the depolymerization step. A part of indigo is also removed as indigo from the fibers during the depolymerization step. In other words, if the textiles to be treated, i.e., the fiber tufts, do not comprise indigo dyed fibers, the bleaching step may be omitted.

After depolymerization and removal of depolymerizing solution 3 from chamber 10, if the fibers still include residual indigo dye, the treated fiber tufts 5 are subjected to a step of bleaching in the chamber 10 by means of a bleaching solution 30. The bleaching solution 30 is provided to the chamber 10 through conduits 73 connected to the pump 8 and through conduits 72, 74, 73.

The bleaching solution 30 is provided in an amount to give a bath ratio in the range of 1/2 to 1/20, preferably 1/7 to 1/9, more preferably 1/8.

The concentration of hydrogen peroxide in the bleaching solution is in the range 2 g/L to 7 g/L, preferably 5 g/L and the solution is heated via coil 9 to a temperature in the range between 100 °C to 110 °C, preferably 105 °C and kept at said temperature for a period of time in the range between 60 to 150 min, preferably 100 minutes to 150 minutes, more preferably 80 to 90 minutes. After said period of time the depolymerizing solution is cooled to a temperature between 40 °C and 80 °C, and discharged back to tank 7a.

According to embodiments, the oxidizing agent is gradually added to the bleaching solution 30 in the chamber 10 for a period of time in the range of 2 minutes to 7 minutes, preferably about 5 minutes.

The gradually addition of the oxidizing agent in the bleaching solution 30 is preferred in order to avoid an undesired increase of the pressure inside the closed chamber 10 and to maintain a good efficiency of the oxidizing agent.

The process further comprises a step of washing the treated fiber tufts 5 after depolymerization or, possibly, bleaching, by means of a washing solution 80 comprising dispersing agents. The washing solution 80 is held in tank 7b and is fed to chamber 10 through conduits 75 connected to pump 8 through conduit 74. The washing solution 80 has a bath ratio in the range of 1/2 to 1/20, preferably 1/2 to 1/8, more preferably 1/5.

The step of washing treated fiber tufts 5 comprising cellulose fibres 40 can be performed either after step g) above described or after the treated textiles 5 have been subject to the bleaching solution 30. In other words, the step of washing can be performed after the end of the depolymerization of the polyester fibres (when no bleaching is carried out) or after the treated fibers 5 have been subject to the step of bleaching wherein the indigo-type dyes have been removed.

Advantageously, after step g) the treated fibers 5 comprise cotton fibres with a degree of polymerization that can be as high as 3500. The product of the invention process does not include cellulose pulp, i.e. does not reduce cellulosic fibers into cellulosic pulp. In other words, the fibers obtained from the process of the invention are still in the form of a fiber tufts, although deprived of its initial polyester fibers component and without any initially present dye.

The treated fibers, preferably after washing, may be dried in a way known per se, e.g. in a tumble dryer, or may be dried in a continuous drier such as, e.g., a belt conveyor drier.

As previously mentioned, if waste fabrics and/or garments to be treated comprise optical brightening agents, such fabrics and/or garments are subject to a pre-treating step of removing the optical brightening agents with a solvent, before carrying out the depolymerization step, preferably before carrying out the stap of mechanically treating said waste fabrics and/or garments to obtain a fiber tufts. Said removal comprises a bath ratio in the range of 1/2 to 1/20, preferably 1/10 at a temperature between 30 °C and 40 °C for a period of time between 10 minutes to 30 minutes.

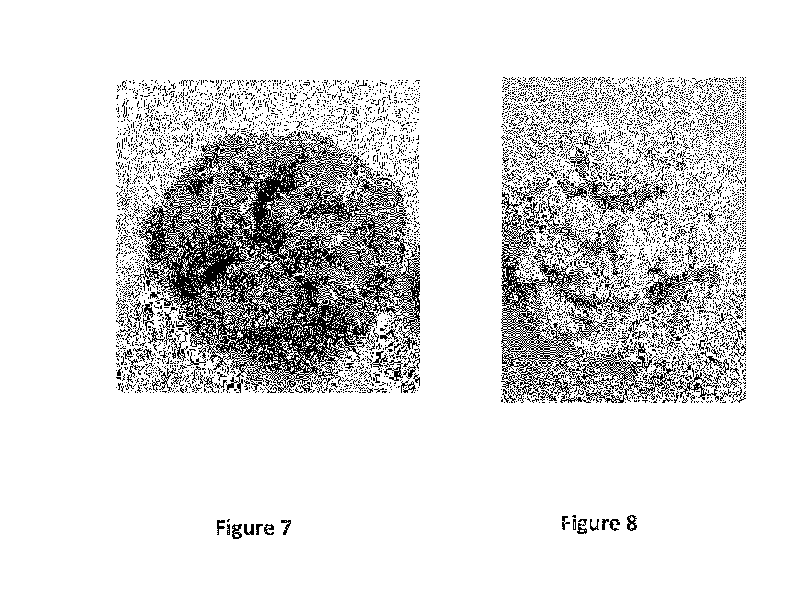

According to a preferred embodiment of the invention process, as shown in figure 7, the depolymerizing solution obtained after a depolymerization cycle is re-used in a subsequent depolymerization cycle of a fresh batch of fibers. Similarly, the bleaching solution and the washing solution may be stored in tanks 7a and 7b to be used again in further processes with the advantage of greatly reducing the consumption of water.

According to possible embodiments, after the step of depolymerizing solution (3) through still and compressed fiber tufts 1 (i.e. after step e), and possibly after removing the solution (after step f), the treated fiber tufts are centrifuged. This can be done within the reaction chamber but, in preferred embodiments, the treated fiber tufts 1, which are in the form of a compressed cake, are moved into a centrifuge. During the centrifuge step, a depolymerization solution (3) can be supplied to the fiber tufts. The depolymerization solution (3) is typically the same used during the circulation step. In particular, as discussed, the depolymerizing solution (3) can be re-used in different cycles of the plant. As a result, the depolymerizing used during the circulation step can be re-used during the centrifuging step, or vice-versa. It is also possible that the centrifuging step is fed depolymerizing solution via a different circuit with respect to the one feeding the circulating step. In this case, the depolymerizing solution used for a batch of fiber tufts, can be re-used to treat a different batch of fiber tufts.

The invention is now further disclosed with reference to the following examples provided for merely illustrative and non-limiting purpose.

### EXAMPLE 1: depolymerization of indigo dyed fiber tufts

*Post-consumer waste fabric comprising cotton fibres in the warp yarns and cotton fibres and polyester fibres in the weft yarns are provided. The waste fabrics are dyed with indigo.*
*The waste fabrics are mechanically treated using a Laroche post-consumer textile waste recycling machine (Andritz).*
*After the mechanical treatment, 2250 Kg of fiber are obtained in the form of a fiber tufts with 4.0% polyester content. The obtained fiber tufts are provided to a closed reactor, and pressed under a pression power of 120 tons.*
*The fiber tufts after said compression step have a bulk density of about 300 g*/*L (±10%); this parameter can be calculated by dividing the kg of tufts by the volume of the basket or of the chamber into which they have been compressed and that is filled by the tufts.*
*The fiber tufts are treated in the closed reactor with 11000 liters of depolymerization solution comprising sodium hydroxide (48 °Be) with a concentration of 90 g*/*L. The depolymerization solution is heated to reach a temperature of* 130 °C *and kept at said temperature for 120 minutes. The bath ratio is equal to 1*/*5. The depolymerization solution is circulated through the fibers 70 to 200 times.*
*After 120 minutes, the depolymerizing solution is cooled to a temperature of 50* °C.
*After the treatment with the depolymerization solution, polyester fibres have been depolymerized into monomers and separated from the remaining treated cellulosic fibers.*
*The thus obtained cellulosic fibers are subsequently treated with a bleaching solution. The bleaching solution comprises hydrogen peroxide with a* mass *concentration of 5 g*/*L, stabilizing agents in a concentration of 3.0 g*/*L, dispersing agents with a concentration of 1g*/*L and wetting agents with a concentration of 0.2 g*/*L.*
*Hydrogen peroxide is gradually poured in the bleaching solution after 5 minutes the treated waste fabric is immersed in the bleaching solution. The bleaching solution has* a *bath ratio of 1*/*5. The bleaching solutions is then heated to a temperature of 105 °C for 90 minutes and indigo dye is removed from the treated fabric.*
*In the final step the treated fiber tufts is treated with a washing solution. The washing solution comprises dispersing agents (e.g. Develope JFR NB - MKS DEVO) with a concentration of 3 g*/*L. The bath ratio is equal to 1*/*5.*
*The washing solution is heated to a temperature of 95 °C for 30 minutes and the treated fiber tuft is washed. The washed fibers are dried and can be further subjected to recycling processes known, per* se, *in the art to make yarns in a textile-to-textile circular process.*

### EXAMPLE 2: depolymerization of indigo dyed fabric clippings

*2250 Kg post-consumer fabric clippings in different sizes comprising cotton fibres in the warp yarns and cotton fibres and polyester fibres in the weft yarns are provided. Additionally, the waste fabrics comprise* 88% *cotton and 12% polyester and are dyed with indigo.*
*The fabric clippings are treated in the closed reactor with a depolymerization solution comprising sodium hydroxide* (48 *°Be) with a concentration of 90 g*/*L in bath ratio equal to 1*/*5. The* same *process is applied* as *in Example 1.*
*The processed fabric clippings are later mechanically treated using a Laroche post-consumer textile waste recycling machine (Andritz) to form fiber tufts from treated fabric clippings.*
*Mechanical properties of fiber tufts (before and after treatment) and fiber tufts obtained from treated clippings are analyzed by fiber bundle method with TexTechno Fibrotest machine according to the ASTM D5867-12 standard and given in Table 1.*
*After the process, the dried depolymerized, bleached and washed fiber tufts from Example 1, fabric clippings and post-formed fiber tufts from Example* 2 *are used to measure the viscosity and the Degree of Polymerization (DP) is calculated. The % drop in viscosity for all samples show similarities. When the mechanical properties of treated fiber tufts are compared, the strength shows a* 17% *decrease after the treatment* as *fiber tufts form whereas* 36% *decrease after the treatment* as *fabric clippings and conversion into fiber tufts.*
*The whiteness of the samples after the treatment* as *in fiber tufts form and clippings form shows a difference. As known, reflectance and yellowing are used to define color grade; the reflectance RD may be used* as a *way of expressing the whiteness degree.*

**Table 1 Properties of fiber tufts treated from tufts form and clippings form.**

| **indigo-dyed** | **Fiber tufts** | | **Clippings form** |
|---|---|---|---|
| | before process | after process | after process and converted into fiber tufts |
| Composition (%) | 4.0% polyester, 96% cotton | 100% cotton | 100% cotton |
| Moisture content (%) | 6.4 | 9.0 | 6.4 |
| Fiber length average (UHML) (mm) | 23.09 | 21.3 | 22.04 |
| Strength (g/tex) | 11.31 | 9.38 | 7.18 |
| Yellowing (+b) | -6.41 | 6.25 | -2.51 |
| Reflectance (RD) | -15.4 | 60.5 | 20.08 |
| Maturity (%) | 87.84 | 94.38 | 86.04 |
| Micronaire | 4.0 | 3.71 | 3.68 |

### EXAMPLE 3: treatment of reactive dyed cotton fiber tufts

*Post-consumer waste fabric comprising 100% cotton fibres are provided. The waste fabrics are dyed with reactive dye in orange color.*
*The waste fabrics are mechanically treated using a Laroche post-consumer textile waste recycling machine (Andritz).*
*After the mechanical treatment, 500 Kg of fiber are obtained in the form of a fiber tufts. The obtained fiber tufts are provided to a closed reactor, after being compressed under a pression power of 120 tons. The fiber tufts under said pressure have a bulk density of about 300 g*/*L (±10%).*
*The fiber tufts are treated in the closed reactor with 3000 liters of depolymerization solution comprising sodium hydroxide (48 °Be) with a concentration of 90 g*/*L. The depolymerization solution is heated to reach a temperature of 130 °C and kept at said temperature for 120 minutes. The bath ratio is equal to 1*/*6. The depolymerization solution is circulated through the fibers 70 to 200 times.*
*After 120 minutes, the depolymerizing solution is cooled to a temperature of 50* °C.
*The treated cellulosic fibers are subsequently treated with a washing solution. The washing solution comprises dispersing agents (e.g. Develope JFR NB - MKS DEVO) with a concentration of 1 g*/*L. The bath ratio is equal to 1*/*6.*
*The washing solution is heated to a temperature of 95 °C for 30 minutes and the treated fiber tuft is washed. The washed fibers are dried and can be further subjected to recycling processes known, per* se, *in the art. The resulting fibers are free from orange colour. No bleaching is required.*
*Mechanical properties of fiber tufts (before and after treatment) and fiber tufts obtained from treated clippings are analyzed by fiber bundle method with TexTechno Fibrotest machine according to the ASTM D5867-12 standard and given in Table 2.*
*When the mechanical properties of before and after treatment of fiber tufts are compared; the fiber length shows a 1.7% decrease after the treatment, the % drop in strength (g*/*tex) is found* as 26% *while the elongation* (%) *stays almost the* same.

### EXAMPLE 4: treatment of reactive dyed cotton fabric clippings - comparison example

*500 Kg post-consumer fabric clippings in different sizes comprising 100% cotton fibres in the warp and the weft directions are provided. Additionally, the waste fabrics are dyed with reactive dye in orange color.*
*The fabric clippings are treated in the closed reactor with a depolymerization solution comprising sodium hydroxide* (48 *°Be) with a concentration of 90 g*/*L in bath ratio equal to 1*/*6. The* same *process applied* as *in Example 3.*
*The processed fabric clippings are later mechanically treated using a Laroche post-consumer textile waste recycling machine (Andritz) to form fiber tufts from treated fabric clippings.*
*Mechanical properties of fiber tufts (before and after treatment) and fiber tufts obtained from treated clippings are analyzed by fiber bundle method with TexTechno Fibrotest machine according to the ASTM D5867-12 standard and given in Table 2.*
*When the mechanical properties are compared; the fiber mean length in the tufts obtained from treated clippings shows a* 11 % *decrease after the treatment compared to a 1.7% of the treated tufts, the % drop in strength (g*/*tex) in the tufts obtained from treated clippings is found* as *about 40% compared to 26% in the tufts treated according to the process in example 3.*
*Both of the samples after the treatment* as *in fiber tufts form and clippings form shows similarities in the whiteness degree from reflectance (RD) above 70; the samples treated* as *fiber tuft form visually have the highest among them.*

**Table 2**

| **reactive-dyed** | **Fiber form** | | **Clippings form** |
|---|---|---|---|
| | before process | after process | after process and converted into fiber tufts |
| Composition (%) | 100% cotton | 100% cotton | 100% cotton |
| Mean length (mm) | 20.2 | 19.85 | 17.99 |
| Fiber length average (UHML) (mm) | 25.34 | 24.61 | 23.05 |
| Strength (g/tex) | 7.34 | 5.4 | 4.14 |

The above data exemplifies how the process of the invention may be used to de-colourize a waste textile. Thus, the invention also refers to a process for removing dyes from dyed waste textiles comprising cellulosic fibres, preferably cotton fibres, and optionally polyester fibers, the process including treatment in a basic aqueous solution, characterized in comprising the following steps:
a) providing an amount of said waste blend textiles, comprising, or substantially consisting of cellulosic fibers (40);
b) mechanically opening said textiles into fiber tufts (1);
c) compressing said fiber tufts (1) in a reaction chamber (10) to a bulk density within the range of 100 to 350 g/L, preferably 240 to 320 g/L, more preferably 280-300 g/L, most preferably 300 g/L;
d) providing an amount of basic solution (3) according to a bath ratio between 1/2 and 1/20 by weight of fiber tufts over weight of solution;
e) circulating said amount of depolymerizing solution (3) through said fiber tufts (1), to remove at least part of said dye from said fiber tufts;
f) removing said solution (3) from said reaction chamber (10);
wherein the temperature of the said depolymerizing solution in step c) is in the range between 101 °C and 160 °C, and wherein the solution is circulated through said fiber tufts, said fiber tufts being in a still and compressed condition, to provide a treated fiber tufts (5) comprising cellulosic staple fibres, preferably cotton staple fibres (40), substantially free from dyes.

The process includes a bleaching step when the dyes are indigo or indigoid dyes. The above disclosure of process features and plant features applies to the decolourizing process here discussed. The fiber tufts are compressed into a basket or other container, or in the reaction chamber, preferably to reach a bulk density of 100 to 350 g/L, preferably 240 to 320 g/L, more preferably 280-300 g/L, most preferably 300 g/L before being treated with the basic aqueous solution. Bulk density is expressed as grams of textile material divided by a known volume occupied by the material in the reactor.

The tests show that for a same fabric, cut into clippings, the removal of dyes from fiber tufts is more effective than removal from clippings and that at least some of the mechanical properties of the fibers are better when the process is carried out on fiber tufts than when the process is carried out on clippings that are eventually opened into fiber tufts. It is believed that this result is obtained because the process carried out on compressed fiber tufts is more uniform than the same process carried out on compressed fabric clippings.

In other words, the invention provides for a first step in which the density of the textile is reduced by opening it into fibers as tufts and a further step in which density is reduced because the fiber tufts are compressed. It is noted that the actual bulk density, expressed in grams per Liter of textile material, in the reaction chamber may advantageously be more or less equivalent for fabric clippings and compressed fiber tufts. Typically, by compressing the fiber tufts, a density of the material in the reactor of e.g. 260 g/L can be obtained, the corresponding amount of compressed clippings would provide a bulk density of about 280 g/L, this difference amounting to about 5-7%. The invention makes it possible to process huge amounts of textile in an extremely efficient way resulting in uniformly decolorized and de-polymerized textile materials.

## Claims

1. A process for recycling waste blend textiles comprising polyester and cellulosic fibres, preferably cotton staple fibres, the process including a depolymerization of the polyester in a basic aqueous solution, **characterized in** comprising the following steps:
a) providing an amount of said waste blend textiles, comprising, or substantially consisting of, or consisting of, cellulosic fibers (40) and polyester fibers (4);
b) mechanically opening said textiles into fiber tufts (1) comprising, or substantially consisting of, or consisting of, cellulosic fibers (40) and polyester fibers (4);
c) providing said fiber tufts (1) in a reaction chamber (10);
d) providing an amount of basic depolymerization solution (3) according to a bath ratio between 1/2 and 1/20 by weight of fiber tufts over weight of solution;
e) circulating said amount of depolymerizing solution (3) through said fiber tufts (1), to depolymerize said polyester (4) into corresponding monomers and to remove said polyester monomers from said fiber tufts;
f) removing said depolymerizing solution (3) from said reaction chamber (10);
wherein the temperature of the said depolymerizing solution in step c) is in the range between 101 °C and 160 °C,
and wherein the solution is circulated through said fiber tufts, said fiber tufts being in a still condition, to provide a treated fiber tufts (5) comprising cellulosic staple fibres, preferably cotton staple fibres (40), substantially free from polyester material.

2. The process according to claim 1, wherein said step of opening the fibers is made via a tearing machine comprising a plurality of tearing cylinders gradually opening said waste textile.

3. The process according to claim 1 or 2, wherein said fiber tufts are compressed before being treated with said depolymerizing solution to increase their bulk density (g/L).

4. The process according to any preceding claim, wherein said depolymerizing solution is an alkaline solution comprising 50 g/L to 500 g/L of a solution of sodium hydroxide having a Baumé degree (°Be) in the range of 43 to 50 °Be, more preferably 50g/L to 90 g/L of a NaOH solution having 48 °Be.

5. The process according to any previous claim, wherein said bath ratio is in the range of 1/2 to 1/8, preferably of 1/5 or 1/6.

6. The process according to any previous claim, wherein the temperature of said depolymerizing solution in step e) is in the range of 120 to 160°C, preferably 130 °C to 140 °C.

7. The process according to any previous claim, wherein the pressure inside said chamber (10) in step e) is in the range of 1.05 bar to 7.0 bar, preferably 2.7 bar to 7.0 bar, more preferably between 2.7 bar and 5.5 bar.

8. The process according to any previous claim, wherein step e) is carried out for a period of time in the range of 30 minutes to 240 minutes, preferably 91 minutes to 240 minutes, more preferably 100 minutes to 150 minutes, most preferably 120 minutes.

9. The process according to any previous claim, wherein said treated fiber tufts are substantially free, preferably free, of dye.

10. The process according to any previous claim, wherein said treated fiber tufts comprise residual indigo dye, said process further comprising a step of bleaching fiber tufts (5) as obtained after step 5) in said chamber (10) by circulating a bleaching solution (30) comprising an oxidizing agent, preferably hydrogen peroxide, through said fiber tufts in said chamber (10), preferably said bleaching solution (30) is provided in a bath ratio in the range of 1/2 to 1/20, more preferably 1/2 to 1/8, most preferably 1/5 by weight of fiber tufts to bleaching solution.

11. The process according to any previous claim, wherein said fiber tufts are compressed in said chamber to a bulk density of 100 to 350 g/L, preferably 240 to 320 g/L, more preferably 280-300 g/L, most preferably 300 g/L, expressed as weight of textile material per volume occupied by said material in said reaction chamber.

12. The process according to any previous claim, further comprising a step of washing the treated fiber tufts (5) by means of a washing solution (80) preferably comprising dispersing agents to remove remaining TPA salts, wherein the bath ratio is in the range of 1/2 to 1/20, preferably 1/7 to 1/9, more preferably of 1/8 by weight of fiber tufts to washing solution.

13. The process according to any previous claim, wherein the number of cycles the depolymerization solution is fed through said fiber tufts is in the range of 30 to 480 cycles per hour, preferably 50 to 400 cycles per hour, more preferably 60 to 300 cycles per hour, most preferably 70 to 200 cycles per hour.

14. The process according to any previous claim, comprising cutting the waste fabric into clippings before said step of mechanically opening said waste textile into fiber tufts.

15. The process according to any previous claim, wherein said waste blend textiles are garments, said garments optionally comprising non-textile elements, wherein said non-textile elements are detached and removed from said garments before or during said step of mechanically treating said waste textile.

16. The process according to any previous claim, wherein said depolymerizing solution, and/or said bleaching solution and/or washing solution is adjusted to its initial concentration of NaOH, bleaching agents and dispersing agents, respectively, and is re-used 1 to 100 times, preferably 10 to 100 times, more preferably 10 to 40 times in a subsequent depolymerizing, bleaching or washing cycle of a new batch of fiber tufts.

17. The process according to any previous claim, wherein the micronaire of the fiber tufts used in said step c), measured according to ASTM D5867-12 is between 3 and 5, preferably between 3.5 and 4.5.

18. A plant (100) to carry out a process of recycling waste textiles comprising polyester fibres (4) and cellulosic staple fibres (40) according to any previous claim, **characterized in that** it comprises:
i. An opening machine (15) suitable to mechanically open waste textile into fiber tufts, preferably a tearing machine.
ii. A closable reaction chamber (10) configured to contain said waste textiles in the form of fiber tufts (1);
iii. At least one tank (7) to contain a depolymerizing solution (3) and optionally at least one of a plurality of tanks (7a,7b) to contain at least one of a bleaching solution (30), and a washing solution (80);
iv. A pump (8) to feed and circulate said depolymerizing solution (3) from said depolymerizing solution tank (7) to and through said chamber (10);
v. Means (90; 9a; 9b) to control the temperature of said depolymerizing solution (3) inside said chamber (10);
vi. Possibly a centrifuge (50), to centrifuge fiber tufts after treatment in the reaction chamber (10).

19. A plant according to claim 18, further comprising a filtering basket (6), to house said fiber tufts (1) in said chamber, said basket being removable from said chamber (10), preferably said chamber comprising at least one perforated separation element (60) housed in said basket (6) to maintain the fibers in a still condition.

20. A polyester free cotton fiber tufts as obtainable according to any claim 1 to 17, wherein cotton fibers in said fiber tufts have a reflectance (RD) greater than 50 measured with ASTM D5867-12 and a degree of polymerization between 600 to 3500.
